Europäisches Patentamt

European Patent Office

Office européen des brevets

(11) Veröffentlichungsnummer: **0 216 998**
**A1**

## (12) EUROPÄISCHE PATENTANMELDUNG

(21) Anmeldenummer: 86108063.8

(22) Anmeldetag: 12.06.86

(51) Int. Cl.⁴: **H02K 21/14** , G01P 3/46 ,
G01P 3/48 , H02K 16/04

(30) Priorität: 27.08.85 DE 3530614

(43) Veröffentlichungstag der Anmeldung:
08.04.87 Patentblatt 87/15

(84) Benannte Vertragsstaaten:
AT BE CH DE FR GB IT LI LU NL SE

(71) Anmelder: Hübner Elektromaschinen AG
Planufer 92b
D-1000 Berlin 61(DE)

(72) Erfinder: Jakob, Peter
Angerburger Allee 53
D-1000 Berlin 19(DE)

(74) Vertreter: Weber, Otto Ernst, Dipl.-Phys.
Hofbrunnstrasse 36
D-8000 München 71(DE)

(54) Bürstenlose Induktionsmaschine.

(57) Die n-phasige Induktionsmaschine weist einen Rotor auf, um den konzentrisch mindestens zwei Statoren ausgebildet sind. Die beiden Statoren, die jeweils mit n, vorzugsweise n = 4, Nuten und Wicklungen versehen sind, sind gegeneinander verdreht angeordnet. Sie können dabei nebeneinander oder übereinander liegen. Wird der Rotor gedreht, so werden in den Wicklungen eines jeden Stators phasenverschobene Trapezspannungen induziert, die überlappend zu einer lückenlosen Gleichspannung zusammengeschaltet werden können.

Fig. 1

EP 0 216 998 A1

## Bürstenlose Induktionsmaschine

Die Erfindung betrifft eine bürstenlose, n-phasige und n-polige Induktionsmaschine, beispielsweise einen Gleichstrom-Tachometerdynamo, zum Erzeugen von Trapezspannungen mit einem Magnete aufweisenden Rotor, mit einem konzentrisch um den Rotor ausgebildeten Stator und mit n ersten und n zweiten überlappend gleichrichtbaren bzw. anschaltbaren Wicklungen.

In der Meß-, Regel-und Antriebstechnik ist es häufig erforderlich, ein Gleichspannungssignal zur Verfügung zu haben, das einer Drehzahl proportional ist. Bei geregelten Antrieben, etwa in Werkzeugmaschinen oder bei Aufzügen, wird ein derartiges Gleichspannungssignal zur Drehzahlregelung verwendet.

Zur Erzeugung einer Gleichspannung, deren Höhe der Drehzahl und deren Polarität der Drehrichtung entspricht, ist die Verwendung eines Gleichspannungs-Tachometerdynamos bekannt, bei welchem die in den Wicklungen induzierten Spannungen einen trapezförmigen Verlauf aufweisen. Werden nun mehrere Trapezspannungen zeitlich nacheinander versetzt induziert, so können sie durch Gleichrichtung bzw. durch eine entsprechend gesteuerte, elektronische Kommutierungsvorrichtung in der Weise nacheinander eingeschaltet und aneinandergereiht werden, daß eine einer Gleichspannung entsprechende Ausgangsspannung abgreifbar ist. Die Gleichrichtung, d.h. das Herausgreifen des jeweils waagrechten Stückes der Trapezspannung durch zeitlich nacheinander angesteuerte elektronische Schalter, ist an sich bekannt. Hierfür werden beispielsweise MOS-Schaltkreise eingesetzt. Schwierigkeiten bereitet es jedoch, eine lückenlose Gleichspannung zu erzeugen, d.h. Trapezspannungen abzuleiten, deren Spannungsverlauf einen möglichst langen konstant verlaufenden Anteil aufweist, da Abweichungen von der Geraden sich nach der Gleichrichtung, d.h. nach der Aneinanderreihung der Trapezstücke, als Welligkeit bemerkbar machen.

In der DE-PS 1926 628 ist ein Tachometerdynamo beschrieben, der bei einem Umlauf vier Trapezspannungen erzeugt. Diese Spannungen nehmen mit ihren konstanten Anteilen jedoch jeweils weniger als 90° ein, so daß sie sich nicht lückenlos zu einer Gleichspannung aneinanderreihen lassen. Aus konstruktiven Gründen und wegen unvermeidlicher magnetischer Inhomogenitäten am Rande der Polschuhe weisen sie lediglich über 60° bis 70° konstante Spannungsanteile auf.

Ferner ist aus dem deutschen Gebrauchsmuster G 83 24 702 eine bürstenlose Induktionsmaschine der eingangs beschriebenen Art bekannt, mit in einem Luftspalt zwischen Rotor und Stator liegenden mehrphasigen, phasenverschoben ansteuerbaren Wicklungen. Jede Phase der Wicklung weist vier Spulen auf, die jeweils in zwei in radialer Richtung übereinanderliegenden Teilspulen unterteilt sind. Die Spulen sind in einem Spulenkörper in der Weise angeordnet, daß an den Kreuzungsstellen jeweils die beiden Teilspulen einer Phase zwischen den im Umfangsrichtung nachfolgenden beiden Spulen einer anderen Phase liegen, und daß sich dort die beiden Teilspulenpaare überlappen. Diese bekannte Induktionsmaschine hat jedoch den Nachteil, daß die Wick lungen mit einem relativ großen Fertigungsaufwand sehr exakt auf den Kunststoff-Spulenkörper im Luftspalt eingelegt werden müssen. Einen weiteren Nachteil stellt der relativ große Luftspalt dar, welcher zum Unterbringen der Wicklungen vorhanden sein muß. Er führt zu einer Feldschwächung und damit zu einer Spannungsverringerung.

Der Erfindung liegt daher die **Aufgabe** zugrunde, eine Induktionsmaschine der eingangs genannten Art anzugeben, deren Wicklungen auf einfache Weise herstellbar sind, und deren ausgangsseitige Trapezspannungen sich durch geringe Welligkeit auszeichnen.

Diese Aufgabe wird dadurch gelöst, daß die ersten Wicklungen in n ersten Nuten um erste Kerne an einem ersten Stator und die zweiten Wicklungen in n zweiten Nuten um zweite Kerne an jeweils mindestens einem zweiten Stator angeordnet sind, und daß der erste und zweite Stator bezüglich der Nuten, Kerne und Wicklungen in Umfangsrichtung gegeneinander versetzt angeordnet sind.

Die Erfindung hat den Vorteil, daß die Wicklungen außerhalb der Maschine gewickelt werden können, so daß preiswerte und leicht verfügbare sogenannte Formspulen zum Einlegen-bzw. Einträufeln verwendet werden können. Dadurch, daß die Wicklungen in Nuten und nicht im Luftspalt untergebracht sind, kann der Luftspalt schmal ausgebildet sein, was sich in einer hohen induzierten Spannung niederschlägt. Es kann eine Welligkeit erreicht werden, die nicht mehr als 2% beträgt. Als weiterer Vorteil ist anzuführen, daß sich die erfindungsgemäße Induktionsmaschine sowohl als Dynamo als auch als Elektromotor betreiben läßt, der sich dadurch auszeichnet, daß er nicht mit sinusförmigen, sondern mit Rechteckspannungen betrieben werden kann und ein konstantes Drehmoment bis zu kleinsten Drehzahlen hin abgibt.

In einer bevorzugten Ausführungsform der Erfindung sind der erste und zweite Stator um 45° mech. gegeneinander versetzt. Die auf diese Weise um 90° elektr. versetzten Trapezspannungen können ohne weiteres mit den bereits bekannten und im Handel erhältlichen Gleichrichterdioden gleichgerichtet werden bzw. mit elektronischen Steuerschaltungen zur Gleichrichtung angesteuert werden, so daß zur Inbetriebnahme keine spezielle Schaltung notwendig ist.

gegeneinander versetzt angeordnet sind.

Auf diese Weise können n Trapezspannungen erzeugt werden, die entsprechend der verschobenen Statoren zueinander gegeneinander phasenverschoben sind.

In einer anderen vorteilhaften Weiterbildung der Erfindung sind die Statoren axial nebeneinander angeordnet. Das hat den Vorteil, daß das Einbringen der Nuten und Wicklungen auf einfache Weise ausgeführt werden kann. Ebenso sind die Versetzungen in Umfangsrichtung ohne Schwierigkeiten einstellbar und gegebenenfalls nachjustierbar.

Besonders vorteilhaft ist es in einem solchen Fall auch, wenn die Statoren axial verschiebbar sind. Somit lassen sich die Statoren voneinander entfernen bzw. aufeinander zu bewegen, so daß möglicherweise vorhandene, geringfügige Intensitätsunterschiede der Magnete ausgeglichen werden können. Es kann ferner abhängig vom Anwendungsfall vorteilhaft sein, daß jedem Statorteil jeweils ein Magnet und ein Polschuh zugeordnet ist, oder für alle Statoren ein gemeinsamer Magnet und Polschuh.

Alternativ zur axialen Anordnung der Statorteile ist eine kurze Baulänge der Induktionsmaschine realisierbar, wenn die Statoren radial übereinander und der Rotor zwischen den Statoren angeordnet sind. Diese Bauform ist insbesondere für sogenannte Hohlwellen-Tachometerdynamos geeignet.

Vorzugsweise ist der Rotor topfförmig um eine Antriebswelle angeordnet. Die Topfwände liegen dann zwischen den Statorteilen.

Es hat sich als vorteilhaft erwiesen, wenn dabei die auf dem Rotor angebrachten Magnete kreisbogenförmig ausgebildet sind. Alternativ dazu können die Magnete auch mit kreisbogenförmigen Polschuhen versehen sein. Mit diesen Maßnahmen kann ein äußerst schmaler Luftspalt erreicht werden.

In einer weiteren vorteilhaften Ausbildung der Erfindung bestehen die Statoren jeweils aus einem genuteten Blechpaket.

Das Blechpaket hat den Vorteil, daß die für die Erregung des Magnetfeldes notwendige Durchflutung möglichst klein gehalten wird.

Eine weitere vorteilhafte Ausgestaltung der Erfindung besteht darin, daß m zweite Statoren vorhanden sind und daß alle Statoren jeweils um

$$\frac{90° \text{ mech.}}{m+1}$$

Vorteilhafterweise sind die Wicklungen in die Nuten eingewickelt und/oder eingeträufelt.

Im folgenden wird die Erfindung anhand zweier in Figuren dargestellter Ausführungsbeispiele weiter beschrieben.

Figur 1 zeigt schematisch einen Querschnitt durch eine Induktionsmaschine,

Figur 2 zeigt schematisch einen Längsschnitt durch die Induktionsmaschine nach Fig. 1 und

Figur 3 zeigt schematisch einen Längsschnitt durch eine weitere Induktionsmaschine.

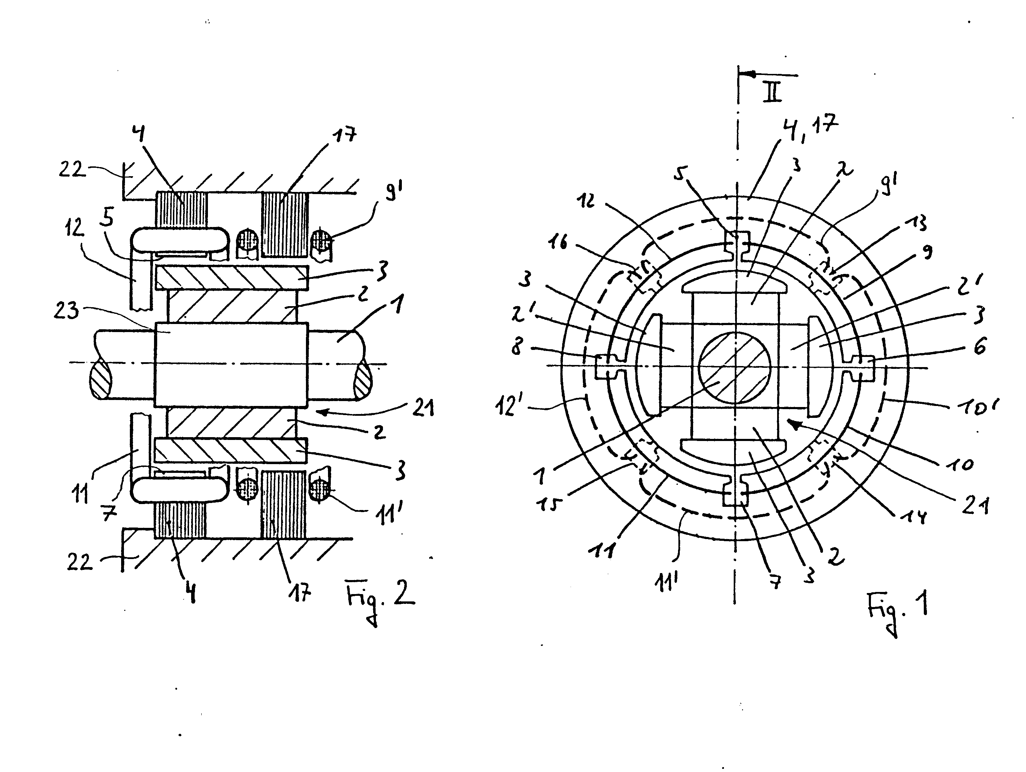

Die in Fig. 1 dargestellte bürstenlose, vierpolige und vierphasige Induktionsmaschine besteht aus einem Rotor 21 und einem ersten und zweiten Stator 4,17, wobei in der gewählten Darstellung der zweite Stator 17 von dem davor angeordneten ersten Stator 4 verdeckt und daher lediglich in der Ansicht nach Fig. 2 erkennbar ist. Der Rotor 21 wird von einer Welle 1 getragen. Er besteht aus einem vierpoligen Polrad mit radial polarisierten Magneten 2,2', die mit konzentrischen Polschuhen 3 versehen sind. Die Polfolge kann Nord-Süd-Nord-Süd-Pol oder Süd-Nord-Süd-Nord-Pol sein.

Der Rotor wird konzentrisch vom ersten und zweiten Stator 4, 17 umgeben, die seitlich nebeneinander angeordnet und jeweils als Blechpaket ausgebildet sind. Der erste Stator 4 ist mit vier um 90° versetzt angeordneten, ersten Nuten 5,6,7,8 versehen. Im zweiten Stator 17 sind vier zweite Nuten 13,14, 15,16 ausgeführt, die ebenfalls um 90° versetzt sind.

In den ersten Nuten 5 bis 8 des ersten Stators 4 sind erste Wicklungen 9,10,11,12 und in den zweiten Nuten 13 bis 16 zweite Wicklungen 9',10',11',12' untergebracht. Um die Darstellung übersichtlich zu gestalten, ist für jede Wicklung - schematisch lediglich ein einziger Leiter wiedergegeben, so daß jede Wicklung nur eine einzige Windung aufweist.

Wie die Fig. 1 zeigt, sind die ersten Nuten 5 bis 8 und die zugehörigen Blechkerne gegenüber den zweiten Nuten 13 bis 16 und den zugehörigen Blechkernen in Umfangsrichtung des Rotors 21 versetzt. Die Verdrehung beträgt in dem hier wiedergegebenen Beispiel 45° mechanisch.

Aus der Fig.2 ist zu entnehmen, daß der erste und zweite Stator 4,17 in Achsrichtung des gemeinsamen Rotors 21 nebeneinander liegen. Falls es erforderlich ist, sind die beiden Statoren 4,17 in axialer Richtung aufeinander zu bzw. voneinander weg bewegbar, damit gegebenenfalls geringfügige Intensitätsunterschiede der Magnete 2,2' ausgeglichen werden können.

Die Verdrehung in Umfangsrichtung kommt auch in der zeichnerischen Darstellung der ersten Wicklungen 11,12 und der zweiten Wicklungen 11',9' zum Ausdruck. Da die Fig.2 eine Ansicht in Pfeilrichtung II auf eine entlang der strichpunktierten Linie geschnittene Induktionsmaschine gemäß der Fig.1 zeigt, liegen die ersten Wicklungen 11,12 offen in den zugehörigen ersten Nuten 5,7, während die versetzt angeordneten zweiten Wicklungen 11',9' angeschnitten wiedergegeben sind.

Der Rotor bzw. das Polrad 21 sitzt auf der Welle 1. Die Induktionsmaschine ist von einem feststehenden Gehäuse 22 umgeben.

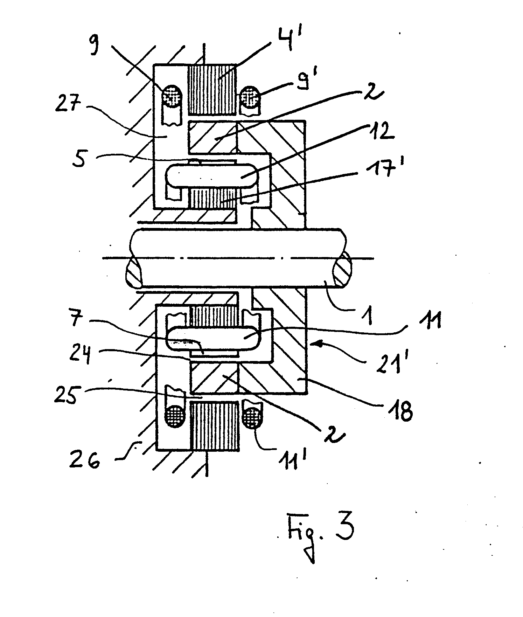

Ein weiteres Ausführungsbeispiel der Erfindung ist in Fig. 3 dargestellt. Dort sind die beiden konzentrischen Statoren 4', 17' radial übereinander angeordnet. Die Anordnung der ersten und zweiten Wicklungen, der ersten und zweiten Nuten und des Polrades entsprechen ansonsten sinngemäß denjenigen der in Fig. 1 wiedergegebenen Induktionsmaschine. Der auf der Welle 1 sitzende Rotor 21' ist als topfförmiges Teil 18 ausgebildet, an welchem die Magnete 2 in der Weise angebracht sind, daß sie in einem Spalt zwischen dem ersten und zweiten Stator 4', 17', liegen. Alle Magnete sind kreisbogenförmig ausgebildet, um ein homogenes Feld in einem Luftspalt 24 zum innenliegenden ersten und in einem Luftspalt 25 zum außenliegenden zweiten Stator 4',17' zu gewährleisten.

Der erste und zweite Stator 4',17' sind gegeneinander um 45° mech. verdreht, wie aus der Wiedergabe der ersten Wicklungen 11,12 in den Nuten 5,7 und den geschnittenen zweiten Wicklungen 11',9' entnehmbar ist.

Für Justierzwecke sind der erste und zweite Stator 4',17' in Achsrichtung der Welle 1 gegeneinander verschiebbar.

Die beiden Statoren 4',17' sind in einer konzentrischen Aussparung 27 eines Gehäuses 26 untergebracht. In der Figur ist lediglich der linke Teil des Gehäuses 26 gezeigt.

Im Zusammenhang mit der Darstellung in den Figuren ist anzumerken, daß im Hinblick auf eine deutliche Wiedergabe die einzelnen Komponenten und ihre Abstände teilweise vereinfacht bzw. vergrößert wiedergegeben sind.

Im folgenden wird die Funktion der in den Figuren dargestellten Induktionsmaschinen beschrieben, wenn sie beispielhaft als Tachometerdynamo eingesetzt sind, wobei grundsätzlich kein Unterschied zwischen dem in den Figuren 1 und 2 und dem in Figur 3 wiedergegebenen Beispiel besteht.

Wenn sich der Rotor 21,21' dreht -beispielsweise wenn die Welle 1 unmittelbar oder mittelbar an eine Antriebswelle eines Elektromotors gekuppelt ist (nicht dargestellt) -so werden unter der Voraussetzung, daß das magnetische Feld zwischen den Polschuhen 3 bzw. den Magneten 2,2' und den Statoren 4,4', 17,17' homogen ist, die in den Nuten liegenden Wicklungshälften pro Zeiteinheit stetig von einem gleich großen magnetischen Feld geschnitten. Anders ausgedrückt umfaßt eine Wicklung einen magnetischen Fluß Ø, der stetig mit der Zeit, d.h. dem Drehwinkel des Rotors 21,21' ansteigt. Die induzierte Spannung ist dann nach der Gleichung $u = \frac{-d\emptyset}{dt}$ konstant.

Betrachtet man den in der Fig. 1 oben stehenden Magneten 2 während einer Drehung im Uhrzeigersinn, so erkennt man, daß nacheinander in den ersten Wicklungen 10,11,12 und 9 des ersten Stators 4 Spannungen induziert werden. Der in der Figur rechtwinklig nach rechts zeigende Magnet 2' mit umgekehrter Polung unterstützt dabei den oberen Magneten 2 in der Induktionswirkung.

Der unterer Magnet 2 induziert zur gleichen Zeit in den ersten Wicklungen 12, 9,10 und 11 Spannungen der gleichen Phasenlage. Bei einem Umlauf werden somit vier erste Trapezspannungen erzeugt, wobei jeweils die Spannungen der beiden ersten Wicklungen 9 und 11 sowie der beiden Wicklungen 10 und 12 phasengleich sind. Die Spannungen der Wicklungen 10 und 12 sind jedoch gegenüber den Spannungen der Wicklungen 9 und 11 um 180° elektrisch phasenverschoben. Da sich jedoch die Wicklungen 9 und 11 sowie 10 und 12 gegenüberliegen und jeweils phasengleich sind, erhält man durch Reihenschaltung der Wicklungen 9 und 11 sowie 10 und 12 zwei um 180° elektrisch verschobene Trapezspannungen, die nunmehr die doppelte Amplitude einer einzelnen Trapezspannung haben. Gleichzeitig hat diese Reihenschaltung zusätzlich eine kompensierende Wirkung, um mechanische und magnetische Unsymmetrien auszugleichen, um damit Trapezspannungen zu erzeugen, die in ihrer Amplitude gleich groß sind, was für eine geringe Oberwelligkeit von entscheidender Bedeutung ist. Aus diesem Grunde wird dieser Anordnung bzw. Reihenschaltung der Vorzug gegeben. Mit den in dem ersten Stator 4 erzeugten Trapezspannungen ist es nicht möglich, eine lückenlose Gleichspannung nach der Gleichrichtung zu erhalten, da nur zwei um 180° elektrisch phasenverschobene Spannungen zur Verfügung stehen. Zur Schließung der Lücken wird der zweite Stator 17 benötigt.

Dieser erzeugt gleichzeitig in den zweiten Wicklungen des zweiten Stators 17,17' auf entsprechende Weise vier zweite Trapezspannungen, die jeweils um 90° elektr. gegenüber den ersten Trapezspannungen versetzt sind. Werden die ersten und zweiten Trapezspannungen gleichgerichtet bzw. nacheinander überlappend angeschaltet, so entsteht eine lückenlose Gleichspannung, ohne daß eine störende Welligkeit auftritt. Die dazu erforderliche Gleichrichtung bzw. elektronische Kommutierungsanordnung sowie die Spulenabgriffe sind in den Figuren nicht wiedergegeben. Dabei ist bei einer elektronischen Kommutierung die Polarität der Ausgangsspannung drehrichtungsabhängig. Bei Verwendung von Gleichrichterdioden ändert sich dagegen die Polarität der Ausgangsspannung bei Änderung der Drehrichtung nicht.

Obwohl die Erfindung anhand zweier 4-phasiger Induktionsmaschinen beispielhaft erläutert ist, sind ohne weiteres auch n-phasige und n-polige Induktionsmaschinen realisierbar, wenn anstelle von vier Nuten und Wicklungen an jedem Stator in sinngemäßer Abwandlung n Nuten, Wicklungen und Pole vorgesehen werden. Ebenso können statt der Beispiele mit einem einzigen zweiten Stator (17,17') auch m zweite Statoren (17,17') vorgesehen werden, wobei dann im Hinblick auf eine gleichmäßige Überlappung eine Verdrehung des ersten und der zweiten Statoren (4,4', 17,17') von

$$\frac{90° \text{ mech.}}{m+1}$$

vorzunehmen ist.

## Ansprüche

1. Bürstenlose, n-phasige und n-polige Induktionsmaschine, beispielsweise Gleichspannungs-Tachometerdynamo, zum Erzeugen von Trapezspannungen, mit einem Magnete aufweisenden Rotor, mit einem konzentrisch um den Rotor angeordneten Stator und mit n ersten und n zweiten überlappend gleichrichtbaren bzw. anschaltbaren Wicklungen,

dadurch gekennzeichent,

daß die ersten Wicklungen (9,10,11,12) in n ersten Nuten (5,6,7,8) um erste Kerne an einem ersten Stator (4, 4') und die zweiten Wicklungen (9',10',11',12') in n zweiten Nuten (13,14,15,16) um zweite Kerne an jeweils mindestens einem zweiten Stator (17,17') angeordnet sind, und daß der erste und zweite Stator (4,4', 17,17') bezüglich der Nuten, Kerne und Wicklungen in Umfangsrichtung gegeneinander versetzt angeordnet sind.

2. Induktionsmaschine nach Anspruch 1,

dadurch gekennzeichnet,

daß der erste und zweite Stator (4,4', 17,17') um 45° mechanisch gegeneinander versetzt sind.

3. Induktionsmaschine nach Anspruch 1 oder 2,

dadurch gekennzeichnet,

daß m zweite Statoren (17, 17') vorhanden sind, und daß alle Statoren (4,4' 17,17') um jeweils

$$\frac{90° \text{ mech.}}{m+1}$$

gegeneinander versetzt angeordnet sind.

4. Induktionsmaschine nach einem der vorhergehenden Ansprüche,

dadurch gekennzeichnet,

daß die Statoren (4,17) axial nebeneinander angeordnet sind.

5. Induktionsmaschine nach Anspruch 4,

dadurch gekennzeichnet,

daß die Statoren (4,17) axial verschiebbar sind.

6. Induktionsmaschine nach Anspruch 4 oder 5,

dadurch gekennzeichnet,

daß jedem Stator (4,17) ein eigener Magnet am Rotor (21) zugeordnet ist.

7. Induktionsmaschine nach Anspruch 4 oder 5,

**gekennzeichnet** durch

gemeinsame Magnete (2,2') für alle Statoren (4,17).

8. Induktionsmaschine nach einem der Ansprüche 1 bis 3,

dadurch **gekennzeichnet,**

daß die Statoren (4',17') radial übereinander angeordnet sind, und daß der Rotor (21) zwischen den Statoren (4',17') angeordnet ist.

9. Induktionsmaschine nach Anspruch 8,

dadurch **gekennzeichnet,**

daß der Rotor (21) topfförmig um eine Antriebswelle (1) angeordnet ist, und daß die Topfwände zwischen den Statoren (4',17') liegen.

10. Induktionsmaschine nach einem der Ansprüche 8 oder 9,

dadurch **gekennzeichnet,**

daß die auf dem Rotor (21) angebrachten Magnete (2,2') kreisbogenförmig ausgebildet sind.

11. Induktionsmaschine nach Anspruch 8 oder 9,

dadurch **gekennzeichnet,**

daß die auf dem Rotor (21) angebrachten Magnete (2,2') mit kreisbogenförmigen Polschuhen (3) versehen sind.

12. Induktionsmaschine nach einem der vorhergehenden Ansprüche,

dadurch **gekennzeichnet,**

daß die Statoren (4,17) jeweils aus einem Blechpaket bestehen.

13. Induktionsmaschine nach einem der vorhergehenden Ansprüche,

dadurch **gekennzeichnet,**

daß halbgeschlossene Nuten (5,6,7,8; 13,14,15,16) verwendet sind.

14. Induktionsmaschine nach einem der vorhergehenden Ansprüche,

dadurch **gekennzeichnet,**

daß die Wicklungen (9,10,11,12; 9',10',11',12') in die Nuten (5,6,7,8; 13,14,15,16) eingeträufelt und/oder eingewickelt sind.

15. Induktionsmaschine nach einem der vorhergehenden-Ansprüche,

dadurch **gekennzeichnet,**

daß die Nuten (5,6,7,8; 13,14,15,16) eines Stators - (4,17) unter einem Winkel zu den Nuten des anderen Stators angeordnet sind.

4

22

17

12 5

9'

23

3

2

1

21

2

11

7

3

22

11'

4

17

Fig. 2

II

4, 17

12

16

5

3

2

9'

13

9

3

2'

2'

8

2'

3

6

12'

10'

1

15

11

11'

7

3

2

14

21

10

Fig. 1

0 216 998

Fig. 3

# EUROPÄISCHER RECHERCHENBERICHT

**Europäisches Patentamt**

Nummer der Anmeldung

EP 86 10 8063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 266 312 (THOMSON-CSF)<br><br>* Seite 1, Zeile 54 - Seite 3, Zeile 17; Figuren 1-5 * | 1,7,10 ,11 | H 02 K 21/14<br>G 01 P 3/46<br>G 01 P 3/48<br>H 02 K 16/04 |
| A | EP-A-0 067 226 (FANUC LTD.)<br>* Seite 1, Zeile 20 - Seite 3, Zeile 10; Seite 4, Zeile 17 - Seite 5, Zeile 27; Figuren 1-4 * | 1 | |
| A | GB-A-2 022 325 (GERARD O'MAHONY)<br>* Zusammenfassung, Figur 5 * | 1,4,12 | |
| A,D | DE-C-1 926 628 (SIEMENS AG)<br>* Spalte 3, Zeile 44 - Spalte 6, Zeile 21, Figuren 1, 2 * | 1 | |
| A,D | DE-U-8 324 702 (R. BOSCH GMBH)<br>* Anspruch 1 * | 1 | RECHERCHIERTE SACHGEBIETE (Int. Cl.4)<br><br>H 02 K 16/00<br>H 02 K 21/00<br>G 01 P 3/00<br>H 02 K 39/00<br>H 02 K 29/00<br>H 02 K 19/00 |

Der vorliegende Recherchenbericht wurde für alle Patentansprüche erstellt.

| Recherchenort | Abschlußdatum der Recherche | Prüfer |
|---|---|---|
| BERLIN | 04-11-1986 | WEIHS J.A. |